# EUROPEAN PATENT APPLICATION

(11) **EP 4 198 855 A1**
(43) Date of publication of application: **21.06.2023**
(21) Application number: 22210376.4
(22) Date of filing: 29.11.2022
(51) Int. Cl.: G06Q 10/0631

(54) **INFORMATION PROCESSING DEVICE, METHOD FOR DETERMINING AN ACTION TO BE IMPLEMENTED, AND DELIVERY SYSTEM**

(30) Priority: 20.12.2021 JP 2021206052
(71) Applicant: Rakuten Group, Inc., Setagaya-ku Tokyo 158-0094 (JP)
(72) Inventor: YAMATO, Takumi, Tokyo, 158-0094 (JP); TANAKA, Daiki, Tokyo, 158-0094 (JP)
(74) Representative: EIP

(57) **Abstract**

The center server 3 determines, for each take-off/landing port 2, any one of charging of the UAV 1, discharging of the UAV 1, operation of the UAV 1 for article delivery, and standby of the UAV 1 as an action to be implemented in the take-off/landing port 2 on the basis of delivery schedule information related to a schedule for article delivery and battery information of the UAV 1 deployed in each of the plurality of take-off/landing ports 2.

## Description

### BACKGROUND

### Technical Field

One or more embodiments of the present invention relates to a technical field such as a system capable of efficiently using a battery of an unmanned aerial vehicle.

### Related Art

In recent years, a technique for efficiently using a battery of an unmanned aerial vehicle used in various applications has been proposed. For example, Patent Literature 1 discloses that charging of a battery is completed at the time of completion of charging decided on the basis of flight condition information related to weather or other flight conditions at a scheduled flight place of an unmanned aerial vehicle, thereby enabling efficient charging in consideration of flight conditions such as weather. Moreover, the Patent Literature 1 discloses that in a case where an electric cell (battery) is not used at the time of completion of charging, the battery is discharged according to an input operation of a user, whereby more efficient charging can be performed.

### Citation List

### Patent Literature

Patent Literature 1: WO 2020/203577 A

### Summary of Invention

### Technical Problem

By the way, in a case where the unmanned aerial vehicle is used for article delivery, in a case where there is a sufficient time until next operation of the unmanned aerial vehicle, such as sudden delivery cancellation after the unmanned aerial vehicle is fully charged, it is desirable to perform charging after discharging once in order to prevent deterioration of the battery. However, in this case, there is a problem in that the charged power is wasted and the power cost increases. Therefore, in article delivery services, a mechanism capable of effectively utilizing the discharged power is desired. In particular, in a case where the unmanned aerial vehicle is used for article delivery in a place where equipment for supplying electric power to the unmanned aerial vehicle is not sufficient (e.g., a mountainous area), the above-described mechanism is desired.

Therefore, one or more embodiments of the present invention are to providing an information processing device, a method for determining an action to be implemented, and a delivery system that are capable of more efficiently using batteries of a plurality of unmanned aerial vehicles by using a plurality of take-off/landing facilities including a charge/discharge unit capable of charging and discharging the unmanned aerial vehicle.

### Solution to Problem

In response to the above issue, in a first aspect of the invention there is provided an information processing device including: a first acquisition means configured to acquire delivery schedule information related to a schedule for article delivery of an article; a second acquisition means configured to acquire battery information of each of a plurality of an unmanned aerial vehicles deployed in each of a respective plurality of take-off/landing facilities each including a charge/discharge unit capable of charging and discharging the respective unmanned aerial vehicle; and a determining means configured to determine, based on the delivery schedule information and the battery information of each of the plurality of unmanned aerial vehicles, an action to be implemented for each of the take-off/landing facilities, each action comprising one of:
charging of the unmanned aerial vehicle, discharging of the unmanned aerial vehicle; operation of the unmanned aerial vehicle for the article delivery of the article; and standby of the unmanned aerial vehicle as an action to be implemented in the take-off/landing facility on a basis of the delivery schedule information and the battery information of each of the unmanned aerial vehicles.. This makes it possible to more efficiently use the batteries of the plurality of unmanned aerial vehicles by using the plurality of take-off/landing facilities including the charge/discharge unit capable of charging and discharging the unmanned aerial vehicle.

The determining means may be configured to change an action to be implemented in any of the take-off/landing facilities according to addition to, or change of, the delivery schedule information. This makes it possible to optimize the actions to be implemented in the facility network configured of the plurality of take-off/landing facilities.

In a case where the schedule for delivery of an article by an unmanned aerial vehicle for which the operation to deliver the article has been determined is canceled, the determining means may be configured to determine to operate the unmanned aerial vehicle for delivery of another article in preference to discharging of the unmanned aerial vehicle, as an operation to be implemented in the respective take-off/landing facility within a first predetermined time This makes it possible to suppress an increase in power cost due to discharging of the power charged for article delivery.

The information processing device may further include a retrieval means configured to retrieve a schedule for delivery of another article requiring operation of the unmanned aerial vehicle within the first predetermined time, wherein in a case where the schedule for delivery of another article is not obtained by the retrieval means, the determining means is configured to determine to discharge of the unmanned aerial vehicle as an action to be implemented in the take-off/landing facility. This makes it possible to more efficiently suppress deterioration of the battery of the unmanned aerial vehicle.

In some embodiments, the determining means is configured to identify, based on the delivery schedule information and the battery information of each of the plurality of unmanned aerial vehicles, a first take-off/landing facility of the plurality of take-off/landing facilities in which a first unmanned aerial vehicle of the plurality of unmanned aerial vehicles is deployed at, and to determine to operate the first unmanned aerial vehicle for delivery of an article, as the action to be performed at the first take-off/landing facility.
In some embodiments, the battery information includes a charged state indicating a remaining amount of a battery of each respective unmanned aerial vehicle, and the determining means is configured to identify the first take-off/landing facility on the basis of a comparison of the respective remaining amounts, or on the basis that the first unmanned aerial vehicle has a remaining amount. This allows the unmanned aerial vehicle to more efficiently operate (work) for article delivery.

Alternatively or additionally, the battery information includes an elapsed time after completion of charging of the battery of each respective unmanned aerial vehicle, and the determining means is configured to identify the first take-off/landing facility on the basis of a comparison of the respective elapsed times, or on the basis that the first unmanned aerial vehicle has an elapsed time longer than a threshold. This allows the unmanned aerial vehicle to more efficiently operate for article delivery while more efficiently suppressing deterioration of the battery due to an increase in elapsed time after completion of charging, among the plurality of unmanned aerial vehicles (That is, it is possible to more efficiently suppress deterioration of each battery among the plurality of unmanned aerial vehicles).

Additionally or alternatively, the battery information includes a degree of deterioration of the battery of each respective unmanned aerial vehicle, and the determining means is configured to identify the first take-off/landing facility on the basis of a comparison of the respective elapsed times, or on the basis that the first unmanned aerial vehicle has a degree of deterioration lower than a threshold. This allows the unmanned aerial vehicle to more efficiently operate for article delivery while more efficiently suppressing deterioration of the battery, among the plurality of unmanned aerial vehicles.

Additionally or alternatively, the battery information includes a use history of the battery of each respective unmanned aerial vehicle, and the determining means identifies the first take-off/landing facility on the basis of a comparison of the respective use histories, or on the basis that the first unmanned aerial vehicle has a use frequency or a number of uses smaller than a threshold. This allows the unmanned aerial vehicle to more efficiently operate for article delivery while more efficiently suppressing deterioration of the battery, among the plurality of unmanned aerial vehicles.

The determining means may be configured to identify a second take-off/landing facility of the plurality of take-off/landing facilities in which a second unmanned aerial vehicle of the plurality of unmanned aerial vehicles is deployed, whose article delivery start is not scheduled for a second predetermined time or more, and to determine to discharge the second unmanned aerial vehicle as the action to be implemented in the second take-off/landing facility.

The determining means may be configured to identify a third take-off/landing facility of the plurality of take-off/landing facilities in which a third unmanned aerial vehicle of the plurality of unmanned aerial vehicles is deployed, whose article delivery start is scheduled after a third predetermined time, and to determine to charge the unmanned aerial vehicle as an action to be implemented in the third take-off/landing facility. This makes it possible to more efficiently suppress deterioration of the battery of the unmanned aerial vehicle.

In some embodiments, information processing device comprises a third acquisition means configured to acquire a weather forecast, wherein in a case where bad weather continuing for a fifth predetermined time or more after a fourth predetermined time is identified from the weather forecast, the determining means is configured to identify a fourth take-off/landing facility of the plurality of take-off/landing facilities in which a fourth unmanned aerial vehicle of the plurality of unmanned aerial vehicles is deployed, the fourth unmanned aerial vehicle having a remaining amount of a battery indicated in the battery information equal to or more than a threshold, and to discharge the fourth unmanned aerial vehicle as an action to be implemented in the identified take-off/landing facility. This makes it possible to more efficiently suppress deterioration of the battery of the unmanned aerial vehicle according to the weather forecast.

In a second aspect of the invention, there is provided a method determining a action to be implemented, the method being executed by one or more computers, the method comprising: a step of acquiring delivery schedule information related to a schedule for delivery of an article; a step of acquiring battery information of each of a plurality of unmanned aerial vehicles deployed in a respective plurality of take-off/landing facilities each including a charge/discharge unit capable of charging and discharging the respective unmanned aerial vehicle; and a step of determining, based on the delivery schedule information and the battery information of each of the plurality of unmanned aerial vehicles, an action to be implemented for each of the take-off/landing facilities, each action comprising one of: charging of the unmanned aerial vehicle; discharging of the unmanned aerial vehicle;
operation of the unmanned aerial vehicle for delivery of the article; and standby of the unmanned aerial vehicle.

In a third aspect of the invention, there is provided a delivery system including an information processing device according to any of the embodiments described above; and the plurality of take-off/landing facilities mentioned above.

In some embodiments, each of the take-off/landing facilities further includes a first control means configured to control the charge/discharge unit to supply power discharged from the unmanned aerial vehicle deployed in the one take-off/landing facility to the unmanned aerial vehicle deployed in any other take-off/landing facility through a power transmission means. This makes it possible to effectively utilize the discharged power.

In some embodiments, each of the take-off/landing facilities further includes a second control means configured to control the charge/discharge unit to supply power discharged from the unmanned aerial vehicle deployed in the take-off/landing facility to a related device in a base where the one take-off/landing facility is installed through a power transmission means. This makes it possible to effectively utilize the discharged power.

### Advantageous Effect of the Invention

According to one or more embodiments of the present invention, it is possible to more efficiently use the batteries of the plurality of unmanned aerial vehicles by using the plurality of take-off/landing facilities including the charge/discharge unit capable of charging and discharging the unmanned aerial vehicle.

### Brief Description of the Drawings

FIG. 1 is a diagram illustrating a schematic configuration example of a delivery system S.
FIG. 2 is a diagram illustrating a schematic configuration example of an UAV 1.
FIG. 3 is a diagram illustrating a schematic configuration example of a take-off/landing port 2.
FIG. 4 is a conceptual diagram illustrating an example in which the power discharged from an UAV 1a deployed in a take-off/landing port 2a is supplied to the UAV 1b deployed in a take-off/landing port 2b, the UAV 1c deployed in a take-off/landing port 2c, and a related device D through a power transmission path L.
FIG. 5A is a diagram illustrating a schematic configuration example of a center server 3.
FIG. 5B is a diagram illustrating an example of a functional block in a control unit 33.
FIG. 6 is a flowchart illustrating an example of processing executed by the control unit 33 of the center server 3.
FIG. 7 is a flowchart illustrating particulars of action determining processing (1) in step S3 illustrated in FIG. 6.
FIG. 8 is a flowchart illustrating particulars of action determining processing (2) in step S5 illustrated in FIG. 6.
FIG. 9 is a flowchart illustrating particulars of action determining processing (3) in step S7 illustrated in FIG. 6.
FIG. 10 is a flowchart illustrating particulars of action determining processing (4) in step S9 illustrated in FIG. 6.
FIG. 11 is a flowchart illustrating particulars of action determining processing (5) in step S11 illustrated in FIG. 6.

### DETAILED DESCRIPTION

Hereinafter, one or more embodiments of the present invention will be described with reference to the drawings.

### [1. Configuration of Delivery System S]

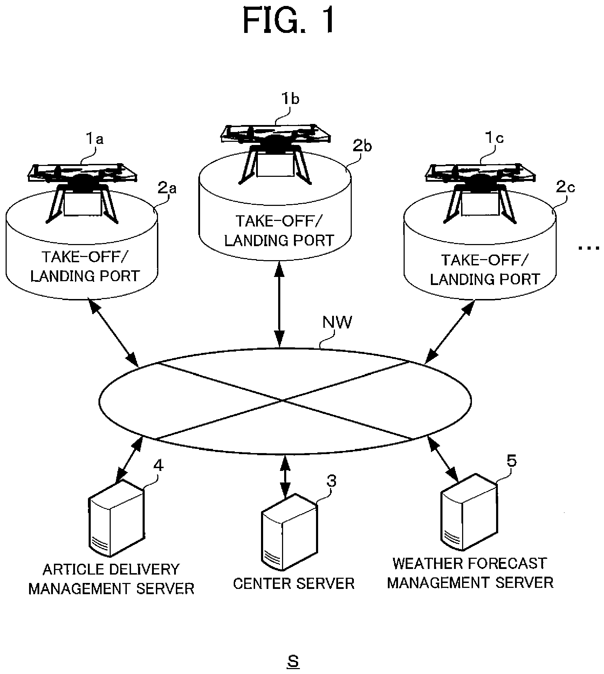

First, a configuration of a delivery system S according to an embodiment of the present invention will be described with reference to FIG. 1. FIG. 1 is a diagram illustrating a schematic configuration example of the delivery system S. As illustrated in FIG. 1, the delivery system S includes a plurality of unmanned aerial vehicles (hereinafter, referred to as "UAV (Unmanned Aerial Vehicle)" 1a, 1b, 1c..., a plurality of take-off/landing ports 2a, 2b, 2c..., a center server 3 that determines actions to be implemented in each of the plurality of take-off/landing ports 2a, 2b, 2c..., an article delivery management server 4 that manages article schedule information related to schedules of delivery of articles, and a weather forecast management server 5 that manages a weather forecast (weather information) for each time in the future, and these can be connected to a communication network NW. Here, the UAV is an example of an unmanned flying body, the take-off/landing port is an example of a take-off/landing facility, and the center server is an example of an information processing device. The communication network NW includes, for example, the Internet, a mobile communication network and a radio base station thereof, and the like. Incidentally, in the following description, as appropriate, the plurality of UAVs 1a, 1b, 1c... will be collectively referred to as UAV 1, and the plurality of take-off/landing ports 2a, 2b, 2c... will be collectively referred to as take-off/landing port 2.

The UAV 1 is also called a drone or a multi-copter, and is deployed in the take-off/landing port 2. The UAV 1 can charge or discharge the battery, for example, in a state of landing on the take-off/landing port 2. In general, performance of a battery may deteriorate when the battery is in a fully charged state or an over-discharged state. With the above reason, the power cost (operation cost) may increase, and thus it is desirable to implement charging and discharging at an appropriate timing in order to suppress the deterioration. When operating (working) for article delivery (e.g. when being dispatched for article delivery), the UAV 1 can take off from the take-off/landing port 2 and fly according to a remote control from the ground by an operator or fly autonomously in the air.

The take-off/landing port 2 is installed at a delivery base, and can charge and discharge the UAV 1. The delivery base is a place (loading point) where the article is loaded into the UAV 1. The delivery base may be a place (transfer point) where the article is delivered from the UAV 1 to a recipient. Incidentally, in one delivery base, one take-off/landing port 2 may be installed, or a plurality of take-off/landing ports 2 may be installed. In a case where a plurality of take-off/landing ports 2 are installed in one delivery base, the power discharged from the UAV 1 deployed in any one take-off/landing port 2 can be charged to the UAV 1 deployed in any other take-off/landing port 2 through the power transmission means.

The article loaded on the UAV 1 as the cargo (baggage) is, for example, an ordered article (e.g., a product or a home delivery article) ordered at an EC (Electronic commerce) site, a delivery site, or the like. Such an article is carried from one of the take-off/landing ports 2 toward a delivery destination (delivery address) designated by an order by the delivery requester (e.g., an orderer of a product). The delivery destination of the article is, for example, a delivery place such as a residence where the recipient of the article lives, an office where the recipient of the article works, a delivery (storage) box for UAV provided in a public facility such as a station, or a hut where the recipient of the article stays. Incidentally, the delivery destination may be the article transfer point, or the delivery destination may be in the vicinity of the article transfer point.

### [1-1. Configuration and Function of UAV 1]

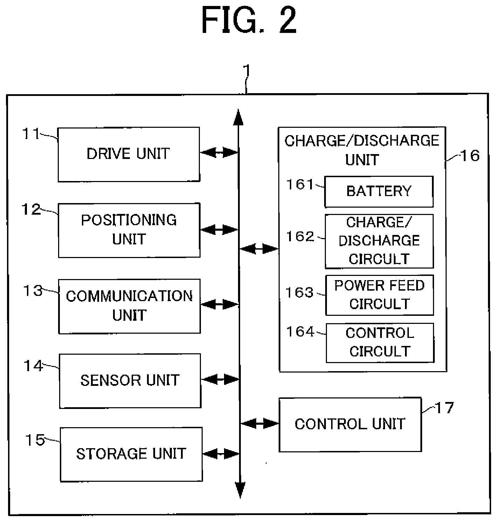

Next, the configuration and function of the UAV 1 will be described with reference to FIG. 2. FIG. 2 is a diagram illustrating a schematic configuration example of the UAV 1. As illustrated in FIG. 2, the UAV 1 includes a drive unit 11, a positioning unit 12, a communication unit 13, a sensor unit 14, a storage unit 15, a charge/discharge unit 16, a control unit 17, and the like. Furthermore, although not illustrated, the UAV 1 includes a rotor (propeller) that is a horizontal rotary blade, a loading unit for loading an article, and the like. The loading unit can load a plurality of articles. The article may be stored in a storage box and loaded on the loading unit. A holding mechanism for holding (that is, binding) the article or the storage box thereof is provided inside the loading unit. Incidentally, the loading unit may include a wire and a reel (winch) for feeding or winding the wire.

The drive unit 11 includes a motor, a rotation shaft, and the like. The drive unit 11 rotates the plurality of rotors by a motor, a rotation shaft, and the like that are driven in accordance with a control signal output from the control unit 17. The positioning unit 12 includes a radio wave receiver, an altitude sensor, and the like. The positioning unit 12 receives, for example, a radio wave transmitted from a GNSS (Global Navigation Satellite System) satellite by the radio wave receiver, and detects the current position of the UAV 1 in the horizontal direction on the basis of the radio wave. Here, the current position in the horizontal direction is two-dimensional position coordinates and may be expressed by latitude and longitude. Incidentally, the current position of the UAV 1 in the horizontal direction may be corrected on the basis of an image captured by the camera of the sensor unit 14. The position information indicating the current position detected by the positioning unit 12 is output to the control unit 17. Furthermore, the positioning unit 12 may detect the current position of the UAV 1 in the vertical direction by an altitude sensor such as an atmospheric pressure sensor. Here, the current position in the vertical direction may be expressed by the altitude. In this case, the position information includes altitude information indicating the altitude of the UAV 1.

The communication unit 13 has a wireless communication function and is responsible for controlling communication performed via the communication network NW. Moreover, the communication unit 13 has a short-range wireless communication function such as Bluetooth (registered trademark), and can perform short-range wireless communication with the take-off/landing port 2. The sensor unit 14 includes various sensors used for flight control of the UAV 1. Examples of the various sensors include an optical sensor, a distance sensor, a triaxial angular velocity sensor, a triaxial acceleration sensor, and a geomagnetic sensor. The optical sensor includes, for example, a camera. For example, the optical sensor continuously senses (e.g., images) a real space within a range that falls within the angle of view of the camera. The sensing information obtained by the sensing of the sensor unit 14 is output to the control unit 17. The storage unit 15 includes a nonvolatile memory or the like, and stores various programs and data. Moreover, the storage unit 15 stores a vehicle ID (identification information) for identifying the UAV 1.

The charge/discharge unit 16 includes a battery 161 (power storage device), a charge/discharge circuit 162, a power feed circuit 163, a control circuit 164, and the like. The charge/discharge circuit 162 includes a non-contact power transmission/reception coil and the like, and receives power from the take-off/landing port 2 and charges the battery 161 or discharges (transmits) the power stored in the battery 161 to the take-off/landing port 2 under the control of the control circuit 164. The power feed circuit 163 supplies (feeds) the power stored in the battery 161 to each unit of the UAV 1 under the control of the control circuit 164. The control circuit 164 controls charging and discharging by the charge/discharge circuit 162 and power feeding by the power feed circuit 163. The control circuit 164 can also measure current, voltage, and power to be charged and discharged by the charge/discharge circuit 162. Information indicating the power measured by the control circuit 164 is output to the control unit 17.

Incidentally, the charge/discharge unit 16 may include a deterioration degree detection circuit for detecting the deterioration degree of the battery 161. The deterioration degree detection circuit measures a charge/discharge current flowing through the battery 161, and detects the deterioration degree on the basis of the integrated value and the effective value. Alternatively, the deterioration degree detection circuit may detect the deterioration degree by measuring the output voltage or the internal resistance of the battery 161. Information indicating the deterioration degree detected by the deterioration degree detection circuit is output to the control unit 17.

The control unit 17 includes at least one CPU (Central Processing Unit), a ROM (Read Only Memory), a RAM (Random Access Memory), and the like, and performs control (flight control) to operate the UAV 1 toward the delivery destination for article delivery. In such control, the rotation speed of the rotor and the position, posture, and traveling direction of the UAV are controlled using the position information acquired from the positioning unit 12, the sensing information acquired from the sensor unit 14, the delivery schedule information, and the like. As a result, the UAV 1 can autonomously move toward the delivery destination. Incidentally, during the flight of the UAV 1, the position information of the UAV 1, the vehicle ID of the UAV 1, and the like are sequentially transmitted to the take-off/landing port 2 in which the UAV 1 is deployed or the center server 3 by the communication unit 13.

Here, the delivery schedule information is transmitted from the take-off/landing port 2 at which the UAV 1 is deployed to the UAV 1, or transmitted from the center server 3 to the UAV 1, for example, and set in the control unit 17. The delivery schedule information includes article information of an article to be delivered, delivery destination information of the article, a delivery schedule, and the like. The article information includes an article ID, an article name, and the like of an article to be delivered. The delivery destination information includes, for example, an address of a delivery destination of an article to be delivered and position information of a transfer point of the article. Such position information is preferably represented by latitude and longitude. Incidentally, the delivery destination information may include information related to the recipient of the article (e.g., the recipient's email address or phone number). The delivery schedule includes, for example, a scheduled departure (delivery start) time or a scheduled departure time zone at which the UAV 1 departs (takes off) from the take-off/landing port 2 for article delivery, and a scheduled arrival time (or time zone) at which the UAV 1 arrives at the transfer point. Incidentally, the delivery schedule may include a scheduled delivery route on which the UAV 1 flies.

### [1-2. Configuration and Function of Take-off/Landing Port 2]

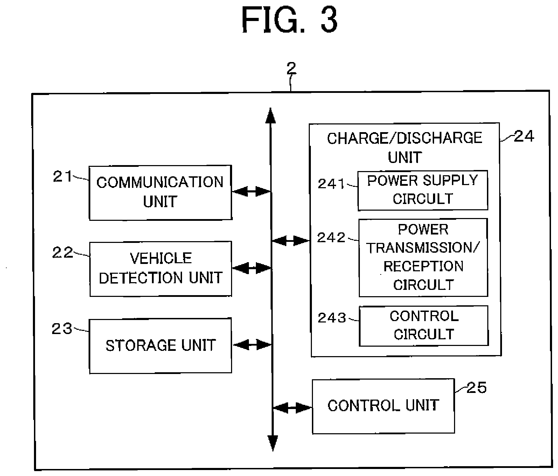

Next, the configuration and function of the take-off/landing port 2 will be described with reference to FIG. 3. FIG. 3 is a diagram illustrating a schematic configuration example of the take-off/landing port 2. As illustrated in FIG. 3, the take-off/landing port 2 includes a communication unit 21, a vehicle detection unit 22, a storage unit 23, a charge/discharge unit (charge/discharge mechanism) 24, and a control unit 25. The communication unit 21 has a wireless communication function and is responsible for controlling communication performed via the communication network NW. Moreover, the communication unit 21 has a short-range wireless communication function such as Bluetooth (registered trademark), and can perform short-range wireless communication with the UAV 1. The vehicle detection unit 22 includes an optical sensor such as a camera, and detects whether the UAV 1 exists at a fixed position where the UAV 1 can charge and discharge at the take-off/landing port 2. The storage unit 23 includes a nonvolatile memory or the like, and stores various programs and data. Moreover, the storage unit 23 stores a port ID for identifying the take-off/landing port 2.

A charge/discharge unit 24 includes a power supply circuit 241, a power transmission/reception circuit 242, a control circuit 243, and the like. Incidentally, in a case where a plurality of take-off/landing ports 2 are installed in one delivery base, the charge/discharge units 24 of the respective take-off/landing ports 2 are connected to each other by a power transmission path (an example of power transmission means) including a switching device (switchgear) for turning on/off power transmission. The power transmission path may be configured by a circuit capable of transmitting and receiving power in a non-contact manner. The power supply circuit 241 includes an AC/DC converter and the like, and supplies, for example, power from a commercial power supply to each unit of the take-off/landing port 2 under the control of the control circuit 243. Incidentally, the power supply circuit 241 preferably includes a battery. In particular, in a delivery base (e.g., a delivery base in a mountainous area) where power cannot be supplied from a commercial power source, power from a battery included in the power supply circuit 241 is supplied to each unit (an example of a related device) of the take-off/landing port 2.

The power transmission/reception circuit 242 includes a non-contact power transmission/reception coil and the like, and transmits power from the power supply circuit 241 to the UAV 1 or receives power discharged from the UAV 1 under the control of the control circuit 243 when the vehicle detection unit 22 detects that the UAV 1 is at a fixed position in the take-off/landing port 2. Here, the UAV 1 being at a fixed position means that the power transmission/reception surface of the non-contact power transmission/reception coil of the power transmission/reception circuit 242 faces the power transmission/reception surface of the non-contact power transmission/reception coil of the charge/discharge circuit 162 in the UAV 1. Incidentally, the power received by the power transmission/reception circuit 242 is preferably stored in a battery in the power supply circuit 241 or supplied to another take-off/landing port 2 installed in the same delivery base through a power transmission path. The control circuit 243 controls, according to a control command from the control unit 25, power supply by the power supply circuit 241 and power transmission and reception by the power transmission/reception circuit 242. The control circuit 243 can also measure current, voltage, and power to be charged and discharged by the power transmission/reception circuit 242. Information indicating the power measured by the control circuit 243 is output to the control unit 25.

The control unit 25 includes at least one CPU, a ROM, a RAM, and the like, and performs, according to various commands received by the communication unit 21 from the center server 3, processing for implementing (or causing to be implemented) any one of charging of the UAV 1, discharging of the UAV 1, operation (work) of the UAV 1 for article delivery, and standby of the UAV 1, the UAV1 being deployed in the take-off/landing port 2. Here, the standby of the UAV 1 means that the UAV 1 is not charged, discharged, and operated, but is put on standby at the take-off/landing port 2. In order to put the UAV 1 on standby, a standby command may be given from the center server 3 to the control unit 25 via the communication unit 21. Moreover, in implementing charging of the UAV 1, discharging of the UAV 1, or operation of the UAV 1, the control unit 25 performs short-range wireless communication with the UAV 1 via the communication unit 21, gives a command according to each action to be implemented to the UAV 1, and acquires necessary information from the UAV 1. Furthermore, in implementing charging of the UAV 1 or discharging of the UAV 1, the control unit 25 controls the charge/discharge unit 24 by giving a control command (charging or discharging command) to the control circuit 243 of the charge/discharge unit 24.

Moreover, in implementing discharging of the UAV 1, the control unit 25 (an example of a first control means) of any one take-off/landing port 2 (e.g., the take-off/landing port 2a) controls the charge/discharge unit 24 and the switching device so as to supply the power discharged from the UAV 1 deployed in the one take-off/landing port 2 to the UAV 1 deployed in any other take-off/landing port 2 (e.g., the take-off/landing port 2b) through the power transmission path. At this time, the control unit 25 of any other take-off/landing port 2 (e.g., the take-off/landing port 2b) receives the power transmitted through the power transmission path, and controls the charge/discharge unit 24 and the switching device to charge the UAV 1 deployed in the other take-off/landing port 2 (e.g., the take-off/landing port 2b). Incidentally, in implementing discharging of the UAV 1, the control unit 25 (an example of a second control means) of any one take-off/landing port 2 (e.g., the take-off/landing port 2a) may control the charge/discharge unit 24 and the switching device so as to supply the power discharged from the UAV 1 deployed in the one take-off/landing port 2 to a related device (equipment) of the one take-off/landing port 2 through the power transmission path.

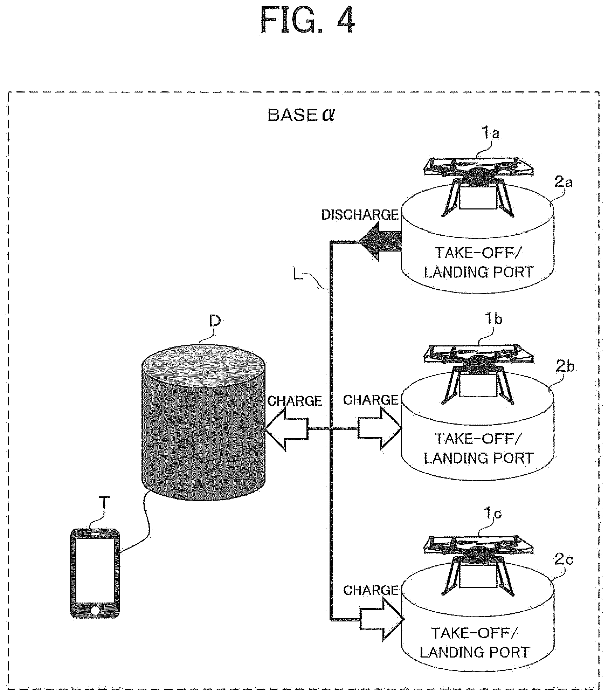

FIG. 4 is a conceptual diagram illustrating an example in which the power discharged from the UAV 1a deployed in the take-off/landing port 2a is supplied to the UAV 1b deployed in the take-off/landing port 2b, the UAV 1c deployed in the take-off/landing port 2c, and a related device D through a power transmission path L. In the example of FIG. 4, the plurality of take-off/landing ports 2a, 2b, and 2c are installed in the same base α, and the related device D in the base α is a battery. In this case, power is supplied (charged) from the related device D to a mobile terminal T carried by a staff in the take-off/landing port 2b.

### [1-3. Configuration and Function of Center Server 3]

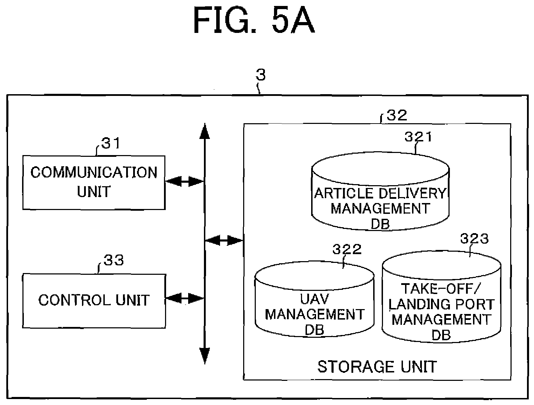

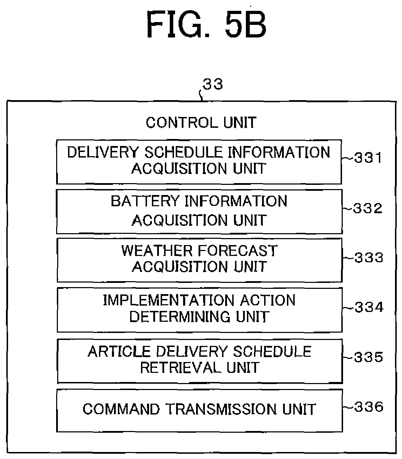

Next, the configuration and function of the center server 3 will be described with reference to FIG. 5. The center server 3 includes one or a plurality of server computers. FIG. 5A is a diagram illustrating a schematic configuration example of the center server 3. As illustrated in FIG. 5A, the center server 3 includes a communication unit 31, a storage unit 32, a control unit 33, and the like. The communication unit 31 is responsible for controlling communication performed via the communication network NW. The position information and the vehicle IDs transmitted from the UAVs 1 are received by the communication unit 31. Moreover, the delivery schedule information regularly or irregularly transmitted (provided) from the article delivery management server 4 is received by the communication unit 31. Moreover, for example, in a case where the schedule for delivery of an article is canceled by the delivery requester, delivery cancellation information is transmitted from the article delivery management server 4 and received by the communication unit 31. Such delivery cancellation information includes, for example, article information of an article whose delivery has been canceled. Moreover, the weather forecast regularly or irregularly transmitted from the weather forecast management server 5 is received by the communication unit 31.

The storage unit 32 includes, for example, a hard disk drive or the like, and stores various programs and data. Moreover, in the storage unit 32, an article delivery management database 321, a UAV management database 322, a take-off/landing port management database 323, and the like are constructed. Incidentally, these databases may be constructed in a database server. The article delivery management database 321 is a database for managing delivery schedule information related to a schedule for delivery of articles. In the article delivery management database 321, article information of an article to be delivered, delivery destination information of the article, a delivery schedule, a delivery assignment status, and the like are stored (registered) in association with each delivery destination. The delivery assignment status indicates whether or not the delivery schedule information is assigned to a UAV 1, and includes the vehicle ID and the like of the UAV 1 to which the delivery schedule information is assigned (that is, article delivery is scheduled) in a case where the delivery schedule information is assigned.

The UAV management database 322 is a database for managing information related to the UAVs 1. In the UAV management database 322, the vehicle IDs of the UAVs 1, the position information indicating the current positions of the UAVs 1, the statuses of the UAVs 1, the battery information of the UAVs 1, and the access information to the UAVs 1 are stored in association with each UAV 1.
Here, the status of a UAV 1 indicates the current implementation status of the UAV 1. Examples of such statuses include "charging" , "discharging", "operating", and "on standby". During charging, a state in which the battery 161 of a UAV 1 is currently being charged in the deployed take-off/landing port 2 is indicated. During discharging, a state in which the battery 161 of a UAV 1 is currently being discharged in the deployed take-off/landing port 2 is indicated. During operating (working), a state in which a UAV 1 is dispatched i.e. separated from the take-off/landing port 2 (e.g., a flight state, a hovering state, or a landing state on the ground) for article delivery is indicated. During standby, the state does not correspond to any of "charging", "discharging", or "operating", but indicates a standby state at the take-off/landing port 2. Incidentally, the status of the UAV 1 is sequentially updated at a predetermined cycle. Such update may be performed on the basis of information from the UAV 1 or the take-off/landing port 2 in which the UAV 1 is deployed.

The battery information of each of the UAVs 1 includes at least one of a charged state of the battery 161 of the respective UAV 1, an elapsed time after completion of charging of the battery 161 of the respective UAV 1, a deterioration degree of the battery 161 of the respective UAV 1, and a use history of the battery 161 of the respective UAV 1. Here, the charged state of the battery 161 indicates the remaining amount (any rate between 0% and 100%) of the battery 161 of the UAV 1. Moreover, the elapsed time after the completion of charging of the battery 161 of the UAV 1 is the elapsed time from the time when the fully charged state is reached. Moreover, the information indicating the deterioration degree of the battery 161 is preferably acquired from the UAV 1 or the take-off/landing port 2 in which the UAV 1 is deployed.

Moreover, the use history of the battery 161 includes the use date and time when the battery 161 was used for article delivery. As a result, the number of times of use and the frequency of use of the battery 161 can be identified (calculated). The use frequency indicates, for example, a ratio of use of the battery 161 for article delivery in a past predetermined period (e.g., for three months). Incidentally, the battery information of the UAV 1 is sequentially updated at a predetermined cycle. Such update may be performed on the basis of information from the UAV 1 or the take-off/landing port 2 in which the UAV 1 is deployed. The access information to the UAV 1 is information (e.g., an IP address or the like) for the center server 3 to access the UAV 1.

The take-off/landing port management database 323 is a database for managing information related to the take-off/landing ports 2. In the take-off/landing port management database 323, the port IDs of the take-off/landing ports 2, the position information of the delivery bases where the take-off/landing port 2 are installed, the access information to the take-off/landing ports 2, and the vehicle IDs of the UAVs 1 deployed in the take-off/landing port 2 are stored in association with each take-off/landing port 2. Here, the access information to a take-off/landing port 2 is information (e.g., an IP address or the like) for the center server 3 to access the take-off/landing port 2.

The control unit 33 includes at least one CPU, a ROM, a RAM, and the like, and executes various processes according to each program stored in the ROM or the storage unit 32. FIG. 5B is a diagram illustrating an example of a functional block in the control unit 33. By executing the program, as illustrated in FIG. 5B, the control unit 33 functions as a delivery schedule information acquisition unit 331 (an example of a first acquisition means), a battery information acquisition unit 332 (an example of a second acquisition means), a weather forecast acquisition unit 333 (an example of a third acquisition means), an action determining unit 334 (an example of a determining means), an article delivery schedule retrieval unit 335 (an example of a retrieval means), a command transmission unit 336, and the like.

The delivery schedule information acquisition unit 331 acquires the delivery schedule information related to the schedule for delivery of articles from the article delivery management server 4 or the delivery management database 321. The battery information acquisition unit 332 acquires the battery information of the UAVs 1 deployed in each of the plurality of take-off/landing ports 2 from the UAV management database 322. The weather forecast acquisition unit 333 acquires a weather forecast for each time in the future from the weather forecast management server 5.

On the basis of the delivery schedule information acquired by the delivery information acquisition unit 331 and the battery information of each of the UAVs 1 acquired by the battery information acquisition unit 332, the action determining unit 334 determines (decides), for each take-off/landing port 2, any one of the charging of the UAV 1, the discharging of the UAV 1, the operation (work) of the UAV 1 for delivery of an article and the standby of the UAV 1 as the action to be implemented in the take-off/landing port 2. The operation of the UAV1 for delivery of an article may comprise dispatching the UAV1 for delivery of the article. Then, the action determining unit 334 appropriately changes the action to be implemented in any take-off/landing port 2 according to an addition to (e.g., new orders for article delivery) or change (e.g., change of time zones for article delivery or cancellation of article delivery) of the delivery schedule information from the article delivery management server 4. As a result, the actions to be implemented in the facility network configured of the plurality of take-off/landing ports 2 can be optimized. Moreover, the action determining unit 334 may appropriately change the action to be implemented in any of the take-off/landing ports 2 according to the weather forecast (e.g., change in weather) acquired by the weather forecast acquisition unit 333.

Incidentally, the actions to be implemented may be determined at the same timing among the plurality of take-off/landing ports 2, or may be determined at different timings. Moreover, in determining the action to be implemented, the status of the relevant UAV 1 in the UAV management database 322 may be appropriately referred to. Moreover, in a case of determining to operate a UAV 1 for article delivery, the action determining unit 334 assigns the delivery schedule information not yet assigned to any UAV 1 to a UAV 1 to which the delivery schedule information has not yet been assigned (that is, the schedule for delivery of an article is set in the UAV 1). As a result, the scheduled departure time or the scheduled departure time zone of the UAV 1 to which the delivery schedule information is assigned is determined. The scheduled departure time or the scheduled departure time zone may be corrected, for example, several hours before or several hours after according to the weather forecast acquired by the weather forecast acquisition unit 333 at the time of assignment to the UAV 1.

As described above, the action determining unit 334 is configured to identify a first take-off/landing port 2 from which a first UAV 1 is to be operated for article delivery. In other words, the action determining unit 334 is configured to identify a first take-off landing port 2 in which a first UAV 1 is deployed, and to determine to operate the first UAV 1 for article delivery, based on the delivery schedule information and the battery information for the plurality of UAVs. For example, the action determining unit 334 may preferentially identify a take-off/landing port 2 in which a UAV 1 having a relatively large remaining amount (remaining amount indicated as the charged state) of the battery 161 is deployed as the first take-off/landing port 2. For example, the action determining unit 334 may identify the first take-off/landing port 2 on the basis of a comparison of the respective remaining amounts of each of the UAVs 1. For example, the take-off/landing port 2 in which a UAV 1 is deployed that is able to deal with the delivery schedule and which has the greatest remaining amount may be selected as the first take-off/landing port 2. Alternatively, the action determining unit 334 may identify any take-off/landing port 2 in which a UAV 1 having a remaining amount being larger than a threshold is deployed as the first take-off/landing port 2. Then, the action determining unit 334 determines to operate for article delivery the UAV 1 deployed at the first take-off/landing port 2 as the action to be implemented in the identified first take-off/landing port 2. As a result, the UAV 1 can be operated more efficiently for article delivery. Moreover, the action determining unit 334 may preferentially identify a take-off/landing port 2 in which the UAV 1 having a relatively long elapsed time after completion of charging of the battery 161 is deployed as the first take-off/landing port 2. For example, the action determining unit 334 may identify the first take-off/landing port 2 on the basis of a comparison of the respective elapsed time of each of the UAVs 1. For example, the take-off/landing port 2 in which a UAV 1 is deployed which has the shortest elapsed time may be selected as the first take-off/landing port 2. Alternatively, the action determining unit 334 may identify any take-off/landing port 2 in which a UAV 1 having an elapsed time being longer than a threshold after completion of charging of the battery 161 is deployed. Then, the action determining unit 334 determines to operate for article delivery the UAV 1 deployed in the first take-off/landing port 2 as the action to be implemented in the identified first take-off/landing port 2. This allows the UAV 1 to more efficiently operate for article delivery while more efficiently suppressing deterioration (performance deterioration) of the battery 161 due to an increase in elapsed time after completion of charging, among the plurality of UAVs 1 (That is, it is possible to more efficiently suppress deterioration of each battery 161 among the plurality of UAVs 1).

Moreover, the action determining unit 334 may preferentially identify the take-off/landing port 2 in which the UAV 1 having a relatively low deterioration degree of the battery 161 is deployed as the first take-off/landing port 2. For example, the action determining unit 334 may identify the first take-off/landing port 2 on the basis of a comparison of the respective degrees of deterioration of each of the UAVs 1. For example, the take-off/landing port 2 in which a UAV 1 is deployed which has the shortest lowest degree of deterioration may be selected as the first take-off/landing port 2. Alternatively, the action determining unit 334 may identify any take-off/landing port 2 in which a UAV 1 having the deterioration degree being lower than a threshold is deployed as the first take-off/landing port 2. Then, the action determining unit 334 determines to operate the UAV 1 for article delivery as the action to be implemented in the identified take-off/landing port 2. This also makes it possible to more efficiently operate the UAV 1 for article delivery while more efficiently suppressing deterioration of the battery 161, among the plurality of UAVs 1. Moreover, the action determining unit 334 may preferentially identify the take-off/landing port 2 in which the UAV 1 having a relatively small use frequency or number of uses identified from the use history of the battery 161 is deployed as the first take-off/landing port 2. For example, the action determining unit may identify the first take-off/landing port 2 on the basis of a comparison of the respective use histories of each of the UAVs 1. For example, the take-off/landing port 2 in which a UAV 1 is deployed which has the lowest use frequency may be selected as the first take-off/landing port 2. Alternatively, the action determining unit 334 may identify any take-off/landing port 2 in which a UAV 1 having a use frequency or the number of uses being smaller than a threshold is deployed. Then, the action determining unit 334 determines to operate the UAV 1 for article delivery as the action to be implemented in the identified take-off/landing port 2. This also makes it possible to more efficiently operate the UAV 1 for article delivery while more efficiently suppressing deterioration of the battery 161, among the plurality of UAVs 1.

Moreover, in a case where the schedule for delivery of the article by the UAV 1 deployed in the take-off/landing port 2 for which the operation has been determined is canceled (e.g., in a case where the delivery cancellation information is received), the action determining unit 334 may determine the operation of the first UAV 1 for delivery of another article in preference to the discharging of the UAV 1 as the action to be implemented in the respective take-off/landing port 2 within a first predetermined time. As a result, it is possible to suppress an increase in power cost due to discharging of the power charged for article delivery. In this case, the article delivery schedule retrieval unit 335 retrieves a schedule for delivery of another article that requires operation (that is, starting delivery) of the UAV 1 within the first predetermined time (e.g., one hour). Here, another article delivery requiring the operation of the UAV 1 within the first predetermined time means, for example, another article delivery having a scheduled departure time within the first predetermined time. Incidentally, the schedule for delivery of another article may be retrieved from, for example, the article delivery management database 321.

Then, in a case where the schedule for delivery of another article is obtained by the article delivery schedule retrieval unit 335, the action determining unit 334 determines to operate he UAV 1 for the delivery of the other article as the action to be implemented in the take-off/landing port 2. At this time, the assignment of the delivery schedule information related to the canceled schedule for delivery of an article is canceled from the UAV 1, and the delivery schedule information related to the other article delivery retrieved for the UAV 1 is assigned. On the other hand, in a case where a schedule for delivery of another article cannot be obtained by the article delivery schedule retrieval unit 335, the action determining unit 334 determines discharging (e.g., discharging until reaching an appropriate voltage) of the UAV 1 as the action to be implemented in the take-off/landing port 2. As a result, deterioration of the battery 161 of the UAV 1 can be more efficiently suppressed. Incidentally, in order to prevent deterioration due to a fully charged state, it is desirable to discharge the battery until the voltage reaches an appropriate voltage. Alternatively, in a case where the schedule for delivery of another article cannot be obtained by the article delivery schedule retrieval unit 335, if the remaining amount of the battery 161 of the UAV 1 is small (e.g., the remaining amount is less than a threshold), the action determining unit 334 may determine the standby of the UAV 1 as the action to be implemented in the take-off/landing port 2.

Moreover, the action determining unit 334 may identify a take-off/landing port 2 in which the UAV 1 having no schedule for starting article delivery for a second predetermined time or more (e.g., six hours) and in which the remaining amount of the battery 161 is equal to or more than a first threshold (e.g., in a fully charged state) is deployed, and determine the discharging (e.g., discharging until reaching an appropriate voltage) of the identified UAV 1 as the action to be implemented in the identified take-off/landing port 2. As a result, deterioration of the battery 161 of the UAV 1 can be more efficiently suppressed. Moreover, the action determining unit 334 may identify a take-off/landing port 2 in which a UAV 1 that is scheduled to start article delivery after a third predetermined time (e.g., three hours) and in which the remaining amount of the battery 161 is less than a second threshold is deployed, and determine the charging of the UAV 1 as the action to be implemented in the identified take-off/landing port 2. At this time, the action determining unit 334 may determine a charging start time so that the charging is completed in accordance with the scheduled departure time or the scheduled departure time zone of the UAV 1 (e.g., immediately before starting the article delivery). This is because when the battery is in a fully charged state, its performance deteriorates even if the battery 161 is left for about one day, and thus it is desirable to complete charging immediately before operation. As a result, deterioration of the battery 161 of the UAV 1 can be more efficiently suppressed.

Incidentally, in a case where bad weather continuing for a fifth predetermined time (e.g., six hours) or more after a fourth predetermined time (e.g., four hours) is identified from the weather forecast acquired by the weather forecast acquisition unit 333, the action determining unit 334 may identify a take-off/landing port 2 in which a UAV 1 whose remaining amount of the battery 161 is equal to or more than the first threshold is deployed, and determine the discharging of the identified UAV 1 as the action to be implemented in the identified take-off/landing port 2. As a result, deterioration of the battery 161 of the UAV 1 can be more efficiently suppressed according to the weather forecast. Incidentally, the bad weather refers to, for example, weather that is not preferable for the UAV 1, such as rain, fog, lightning, and strong wind.

The command transmission unit 336 transmits a command (e.g., a charging command, a discharging command, an operation command, or a standby command) according to each action to the take-off/landing port 2 via the communication unit 31 in order to cause the action determined by the action determining unit 334 to be implemented in the take-off/landing port 2. Here, the charging command may indicate a charging start time referred to in implementing charging. Moreover, the discharging command may indicate an appropriate voltage to be referred to in implementing the discharging. Incidentally, the command transmission unit 336 may transmit a control command for supplying the power discharged from the UAV 1 deployed in any one of the take-off/landing ports 2 to the UAV 1 deployed in any other take-off/landing port 2 through the power transmission path, to each take-off/landing port 2 via the communication unit 31. Moreover, the command transmission unit 336 may transmit a control command for supplying the power discharged from the UAV 1 deployed in any one of the take-off/landing ports 2 to the related device in the base where the one take-off/landing port 2 is installed through the power transmission path, to each take-off/landing port 2 via the communication unit 31.

### [2. Operation of Delivery System S]

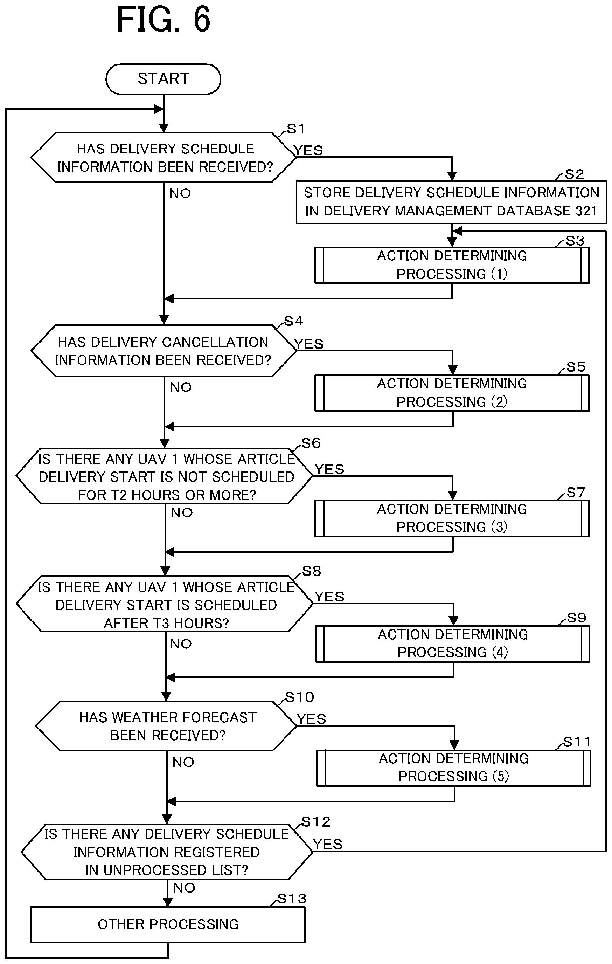

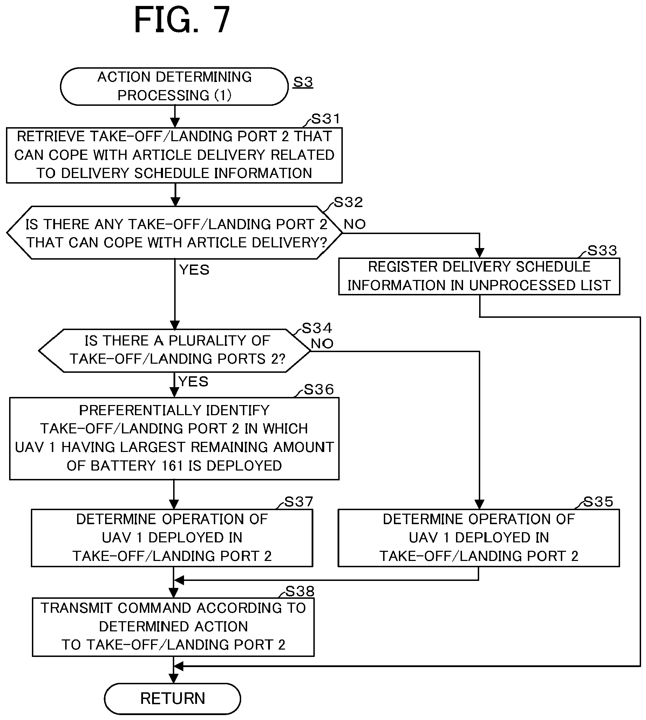

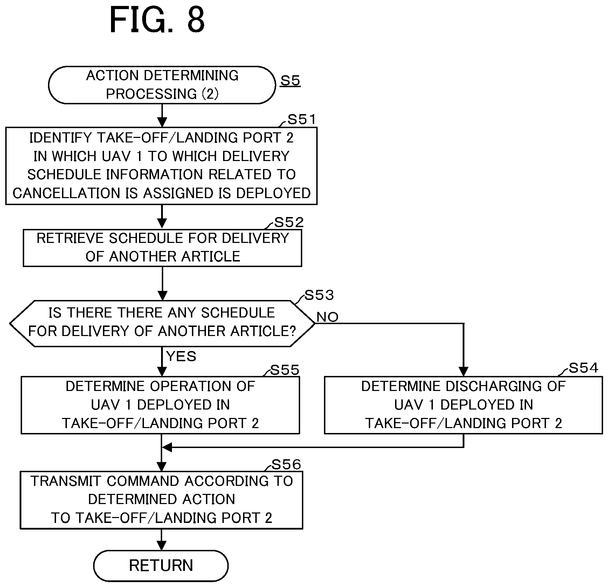

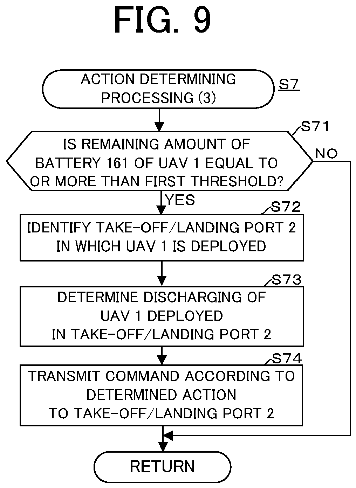

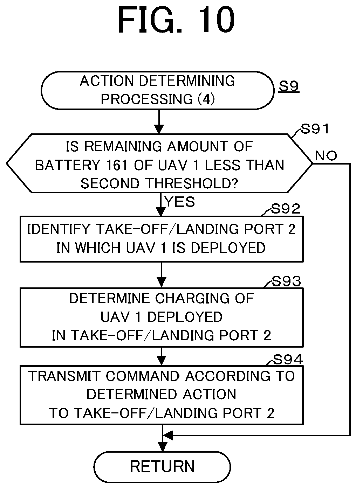

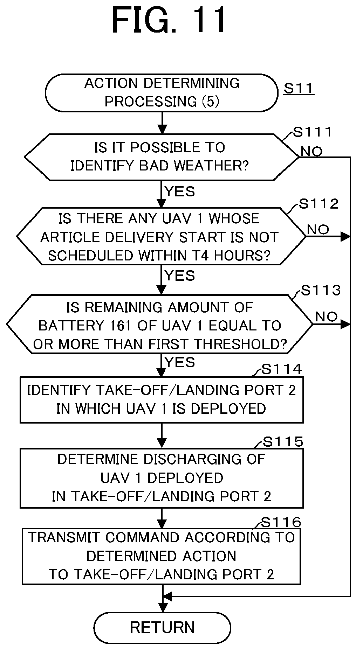

Next, an operation of a delivery system S according to the present embodiment will be described with reference to FIGs. 6 to 9. FIG. 6 is a flowchart illustrating an example of processing executed by the control unit 33 of the center server 3. FIG. 7 is a flowchart illustrating particulars of the action determining processing (1) in step S3 illustrated in FIG. 6. FIG. 8 is a flowchart illustrating particulars of the action determining processing (2) in step S5 illustrated in FIG. 6. FIG. 9 is a flowchart illustrating particulars of the action determining processing (3) in step S7 illustrated in FIG. 6. FIG. 10 is a flowchart illustrating particulars of the action determining processing (4) in step S9 illustrated in FIG. 6. FIG. 11 is a flowchart illustrating particulars of the action determining processing (5) in step S11 illustrated in FIG. 6. Incidentally, the processing illustrated in FIG. 6 is basically executed at all times except when maintenance or the like is required, for example.

In FIG. 6, the control unit 33 determines whether or not the delivery schedule information from the article delivery management server 4 has been received (step S1). In a case where it is determined that the delivery schedule information from the article delivery management server 4 has been received (acquired by the delivery schedule information acquisition unit 331) (step S1: YES), the processing proceeds to step S2. Incidentally, the control unit 33 (delivery schedule information acquisition unit 331) may request the delivery schedule information from the article delivery management server 4 immediately before step S1, and acquire the delivery schedule information transmitted from the article delivery management server 4 in response to the request. On the other hand, in a case where it is determined that the delivery schedule information from the article delivery management server 4 has not been received (step S1: NO), the processing proceeds to step S4.

In step S2, the control unit 33 stores the delivery schedule information received in step S1 in the delivery management database 321. The delivery schedule information stored here includes a delivery assignment status indicating "NONE" assignment to the UAV 1. Next, the control unit 33 executes action determining processing (1) illustrated in FIG. 7 (step S3).

In the action determining processing (1) illustrated in FIG. 7, the control unit 33 refers to the UAV management database 322 and the take-off/landing port management database 323 to retrieve a take-off/landing port 2 that can cope with the article delivery related to the delivery schedule information (step S31). For example, as a take-off/landing port 2 that can cope with the article delivery related to the delivery schedule information, a take-off/landing port 2 that is a take-off/landing port 2 within a predetermined distance from the delivery destination (or the transfer point) indicated in the delivery schedule information and in which a UAV 1 that can operate at the scheduled delivery time (or the scheduled delivery time zone) indicated in the delivery schedule information is deployed is retrieved. Here, a UAV 1 that can operate at the scheduled delivery time (or the scheduled delivery time zone) corresponds to, for example, a UAV 1 that is in a charged state (e.g., a state in which the remaining amount of the battery 161 is equal to or more than the first threshold) enough to start article delivery at the scheduled delivery time (or scheduled delivery time zone) and to which delivery schedule information has not yet been assigned.

Next, the control unit 33 determines whether or not there is a take-off/landing port 2 that can cope with the article delivery related to the delivery schedule information as a result of the retrieval in step S31 (step S32). In a case where it is determined that there is no take-off/landing port 2 that can cope with the article delivery related to the delivery schedule information (step S32: NO), the delivery schedule information is registered in an unprocessed list (step S33), and the process returns to the processing illustrated in FIG. 6. On the other hand, in a case where it is determined that there is a take-off/landing port 2 that can cope with the article delivery related to the delivery schedule information (step S32: YES), the processing proceeds to step S34.

In step S34, the control unit 33 determines whether or not there are a plurality of take-off/landing ports 2 that can cope with the article delivery related to the delivery schedule information. In a case where it is determined that there is no plurality of take-off/landing ports 2 (in other words, there is one port) that can cope with the article delivery related to the delivery schedule information (step S34: NO), the processing proceeds to step S35. On the other hand, in a case where it is determined that there are a plurality of take-off/landing ports 2 that can cope with the article delivery related to the delivery schedule information (step S34: YES), the processing proceeds to step S36.

In step S35, the control unit 33 (action determining unit 334) determines to operate for article delivery the UAV 1 deployed in the take-off/landing port 2 as the action to be implemented in the take-off/landing port 2 that can cope with the article delivery related to the delivery schedule information, and assigns the delivery schedule information to the UAV 1. As a result, the delivery assignment status stored in the delivery management database 321 is updated (that is, assignment to the UAV 1 is updated to "YES").

On the other hand, in step S36, the control unit 33 preferentially identifies the take-off/landing port 2 in which the UAV 1 (e.g., a charging or standby UAV 1) having the largest remaining amount of the battery 161 indicated in the battery information acquired by the battery information acquisition unit 332 is deployed, among the plurality of take-off/landing ports 2 that can cope with the article delivery related to the delivery schedule information. Incidentally, in step S36, the control unit 33 may preferentially identify the take-off/landing port 2 in which the UAV 1 having the longest elapsed time after completion of charging of the battery 161 indicated in the battery information acquired by the battery information acquisition unit 332 is deployed, among the plurality of take-off/landing ports 2 that can cope with the article delivery related to the delivery schedule information.

Alternatively, in step S36, the control unit 33 may preferentially identify the take-off/landing port 2 in which the UAV 1 having the lowest deterioration degree of the battery 161 indicated in the battery information acquired by the battery information acquisition unit 332 is deployed, among the plurality of take-off/landing ports 2 that can cope with the article delivery related to the delivery schedule information. Alternatively, in step S36, the control unit 33 may preferentially identify the take-off/landing port 2 in which the UAV 1 having the smallest use frequency or number of uses identified from the use history of the battery 161 indicated in the battery information acquired by the battery information acquisition unit 332 is deployed, among the plurality of take-off/landing ports 2 that can cope with the article delivery related to the delivery schedule information.

Next, the control unit 33 (action determining unit 334) determines the operation of the UAV 1 deployed in the take-off/landing port 2 as the action to be implemented in the take-off/landing port 2 identified in S36 (step S37), and assigns the delivery schedule information to the UAV 1. As a result, the delivery assignment status stored in the delivery management database 321 is updated (that is, assignment to the UAV 1 is updated to "YES").

Next, in order to cause the take-off/landing port 2 to implement the action determined in step S35 or step S37, the control unit 33 causes the command transmission unit 336 to transmit a command according to the action to the take-off/landing port 2 via the communication unit 31 (step S38), and the process returns to the processing illustrated in FIG. 6. As a result, the control unit 25 of the take-off/landing port 2 performs, according to the command from the center server 3, processing for implementing (that is, for starting article delivery at the scheduled departure time or the scheduled departure time zone) the operation of the UAV 1 deployed in the take-off/landing port 2.

Next, in step S4, the control unit 33 determines whether or not the delivery cancellation information from the article delivery management server 4 has been received. In a case where it is determined that the delivery cancellation information from the article delivery management server 4 has been received (step S4: YES), the action determining processing (2) illustrated in FIG. 8 is executed (step S5). On the other hand, in a case where it is determined that the delivery cancellation information from the article delivery management server 4 has not been received (step S4: NO), the processing proceeds to step S6.

In the action determining processing (2) illustrated in FIG. 8, the control unit 33 identifies the take-off/landing port 2 in which the UAV 1 (e.g., a charging or standby UAV 1) to which the delivery schedule information (that is, delivery schedule information related to cancellation) including the article information indicated in the delivery cancellation information is assigned is deployed (step S51). Next, the control unit 33 causes the article delivery schedule retrieval unit 335 to retrieve, from the article delivery management database 321, a schedule for delivery for another article that requires operation of the UAV 1 within the first predetermined time (e.g., one hour) from the current point of time, for example (step S52).

Next, as a result of the retrieval in step S52, the control unit 33 determines whether there is a schedule for delivery of another article (that is, whether the schedule has been obtained) or not (step S53). In a case where it is determined that there is no schedule for delivery of another article (step S53: NO), the processing proceeds to step S54. On the other hand, in a case where it is determined that there is a schedule for delivery of another article (step S53: YES), the processing proceeds to step S55.

In step S54, the control unit 33 (action determining unit 334) determines the discharging of the UAV 1 as the action to be implemented in the take-off/landing port 2 identified in step S51, and cancels the assignment of the delivery schedule information related to the canceled schedule for article delivery from the UAV 1. As a result, the delivery assignment status stored in the delivery management database 321 is updated (that is, assignment to the UAV 1 is updated to "NONE"). Here, if the remaining amount of the battery 161 of the UAV 1 is small, the standby of the UAV 1 may be determined as the action to be implemented in the take-off/landing port 2 identified in step S51.

On the other hand, in step S55, the control unit 33 (action determining unit 334) determines the operation of the UAV 1 for delivery of another article as the action to be implemented in the take-off/landing port 2 identified in step S51, cancels the assignment of the delivery schedule information related to the canceled schedule for article delivery from the UAV 1, and assigns the delivery schedule information related to the delivery of the other article to the UAV 1.

Next, in order to cause the take-off/landing port 2 to implement the action determined in step S54 or step S55, the control unit 33 causes the command transmission unit 336 to transmit a command according to the action to the take-off/landing port 2 via the communication unit 31 (step S56), and the process returns to the processing illustrated in FIG. 6. As a result, the control unit 25 of the take-off/landing port 2 performs, according to a command (discharging command) from the center server 3, processing for implementing discharging (e.g., discharging until reaching an appropriate voltage) of the UAV 1 or operation (that is, operation for delivery of another article) of the UAV 1, the UAV 1 deployed in the take-off/landing port 2.

Next, in step S6, the control unit 33 refers to the article delivery management database 321, and determines whether or not there is a UAV 1 (e.g., a standby UAV 1) whose article delivery start is not scheduled for the second predetermined time (e.g., six hours) or more from the current point of time, for example (hereinafter, referred to as "article delivery start is not scheduled for T2 hours or more"). In a case where it is determined that there is a UAV 1 whose article delivery start is not scheduled for T2 hours or more (step S6: YES), the action determining processing (3) illustrated in FIG. 9 is executed (step S7). On the other hand, in a case where it is determined that there is no UAV 1 whose article delivery start is not scheduled for T2 hours or more (that is, all the UAVs 1 are scheduled to start article delivery within the second predetermined time) (step S6: NO), the processing proceeds to step S8.

In the action determining processing (3) illustrated in FIG. 9, the control unit 33 refers to the UAV management database 322 and determines whether or not the remaining amount of the battery 161 of the UAV 1 whose article delivery start is not scheduled for T2 hours or more is equal to or more than the first threshold (step S71). In a case where it is determined that the remaining amount of the battery 161 of the UAV 1 whose article delivery start is not scheduled for T2 hours or more is equal to or more than the first threshold (step S71: YES), the processing proceeds to step S72. On the other hand, in a case where it is determined that the remaining amount of the battery 161 of the UAV 1 whose article delivery start is not scheduled for T2 hours or more is not equal to or more than the first threshold (step S71: NO), the process returns to the processing illustrated in FIG. 6.

In step S72, the control unit 33 refers to the UAV management database 322 and the take-off/landing port management database 323, and identifies the take-off/landing port 2 in which the UAV 1 whose remaining amount of the battery 161 is equal to or more than the first threshold is deployed. Next, the control unit 33 (action determining unit 334) determines the discharging of the UAV 1 as the action to be implemented in the take-off/landing port 2 identified in step S72 (step S73). Next, in order to cause the take-off/landing port 2 to implement the action determined in step S73, the control unit 33 causes the command transmission unit 336 to transmit a command according to the action to the take-off/landing port 2 via the communication unit 31 (step S74). As a result, the control unit 25 of the take-off/landing port 2 performs, according to a command (discharging command) from the center server 3, processing for implementing discharging (e.g., discharging until reaching an appropriate voltage) of the UAV 1 deployed in the take-off/landing port 2.

Next, in step S8, the control unit 33 refers to the article delivery management database 321, and determines whether or not there is the UAV 1 (e.g., a standby UAV 1) whose article delivery start is scheduled after the third predetermined time (e.g., three hours) from the current point of time, for example (hereinafter, referred to as "article delivery start is scheduled after T3 hours"). In a case where it is determined that there is a UAV 1 whose article delivery start is scheduled after T3 hours (step S8: YES), the action determining processing (4) illustrated in FIG. 10 is executed (step S9). On the other hand, in a case where it is determined that there is no UAV 1 whose article delivery start is not scheduled after T3 hours (step S8: NO), the processing proceeds to step S10.

In the action determining processing (4) illustrated in FIG. 10, the control unit 33 refers to the UAV management database 322 and determines whether or not the remaining amount of the battery 161 of the UAV 1 whose article delivery start is scheduled after T3 hours is less than the second threshold (step S91). In a case where it is determined that the remaining amount of the battery 161 of the UAV 1 whose article delivery start is scheduled after T3 hours is less than the second threshold (step S91: YES), the processing proceeds to step S92. On the other hand, in a case where it is determined that the remaining amount of the battery 161 of the UAV 1 whose article delivery start is scheduled after T3 hours is not less than the second threshold (step S91: NO), the process returns to the processing illustrated in FIG. 6.

In step S92, the control unit 33 refers to the UAV management database 322 and the take-off/landing port management database 323, and identifies the take-off/landing port 2 in which the UAV 1 whose remaining amount of the battery 161 is less than the second threshold is deployed. Next, the control unit 33 (action determining unit 334) determines the charging of the UAV 1 as the action to be implemented in the take-off/landing port 2 identified in step S92 (step S93). Next, in order to cause the take-off/landing port 2 to implement the action determined in step S93, the control unit 33 causes the command transmission unit 336 to transmit a command according to the action to the take-off/landing port 2 via the communication unit 31 (step S94). As a result, the control unit 25 of the take-off/landing port 2 performs, according to a command (charging command) from the center server 3, processing for implementing charging of the UAV 1 deployed in the take-off/landing port 2. For example, charging is started at the charging start time indicated by the charging command, and charging is completed immediately before the UAV 1 starts article delivery.

Next, in step S10, the control unit 33 determines whether or not a weather forecast from the weather forecast management server 5 has been received. In a case where it is determined that a weather forecast from the weather forecast management server 5 has been received (acquired by the weather forecast acquisition unit 333) (step S10: YES), the action determining processing (5) illustrated in FIG. 11 is executed (step S11). Incidentally, the control unit 33 (weather forecast acquisition unit 333) may request a weather forecast from the weather forecast management server 5 immediately before step S10, and acquire the weather forecast transmitted from the weather forecast management server 5 in response to the request. On the other hand, in a case where it is determined that a weather forecast from the weather forecast management server 5 has not been received (step S10: NO), the processing proceeds to step S12.

In the action determining processing (5) illustrated in FIG. 11, the control unit 33 determines whether or not it is possible to identify, from the weather forecast, bad weather continuing for the fifth predetermined time (e.g., six hours) or more after the fourth predetermined time (e.g., four hours) from the current point of time, for example (step S111). In a case where it is determined that it is not possible to identify the bad weather continuing for the fifth predetermined time or more after the fourth predetermined time from the current point of time (step S111: NO), the process returns to the processing illustrated in FIG. 6. On the other hand, in a case where it is determined that it is possible to identify the bad weather continuing for the fifth predetermined time or more after the fourth predetermined time from the current point of time (step S111: YES), the processing proceeds to step S112.

In step S112, the control unit 33 refers to the article delivery management database 321, and determines whether or not there is a UAV 1 (e.g., a standby UAV 1) whose article delivery start is not scheduled within the fourth predetermined time (e.g., four hours) from the current point of the, for example (hereinafter, referred to as "article delivery start is not scheduled within T4 hours"). In a case where it is determined that there is no UAV 1 whose article delivery start is not scheduled within T4 hours (that is, all the UAVs 1 are scheduled to start article delivery within the fourth predetermined time) (step S112: NO), the process returns to the processing illustrated in FIG. 6. On the other hand, in a case where it is determined that there is a UAV 1 whose article delivery start is not scheduled within T4 hours (step S112: YES), the processing proceeds to step S113.

In step S113, the control unit 33 refers to the UAV management database 322 and determines whether or not the remaining amount of the battery 161 of the UAV 1 whose article delivery start is not scheduled within T4 hours is equal to or more than the first threshold. In a case where it is determined that the remaining amount of the battery 161 is not equal to or more than the first threshold (step S113: NO), the process returns to the processing illustrated in FIG. 6. On the other hand, in a case where it is determined that the remaining amount of the battery 161 is equal to or more than the first threshold (step S113: YES), the processing proceeds to step S114.

In step S114, the control unit 33 refers to the UAV management database 322 and the take-off/landing port management database 323, and identifies the take-off/landing port 2 in which the UAV 1 whose remaining amount of the battery 161 is equal to or more than the first threshold is deployed. Next, the control unit 33 (action determining unit 334) determines the discharging of the UAV 1 as the action to be implemented in the take-off/landing port 2 identified in step S114 (step S115). Incidentally, in a case where the delivery schedule information has already been assigned to the UAV 1, the scheduled delivery time included in the delivery schedule information may be changed (that is, postponed).

Next, in order to cause the take-off/landing port 2 to implement the action determined in step S115, the control unit 33 causes the command transmission unit 336 to transmit a command according to the action to the take-off/landing port 2 via the communication unit 31 (step S116), and the process returns to the processing illustrated in FIG. 6. As a result, the control unit 25 of the take-off/landing port 2 performs, according to a command (discharging command) from the center server 3, processing for implementing discharging (e.g., discharging until reaching an appropriate voltage) of the UAV 1 deployed in the take-off/landing port 2.

Next, in step S12, the control unit 33 determines whether or not there is delivery schedule information registered in the unprocessed list. In a case where it is determined that there is delivery schedule information registered in the unprocessed list (step S12: YES), the process returns to step S3, and the action determining processing (1) is executed. On the other hand, in a case where it is determined that there is no delivery schedule information registered in the unprocessed list (step S12: NO), other processing such as interruption is executed (step S13), and the process returns to step S1. Incidentally, in other processing, the timing of returning to step S1 may be delayed by, for example, about several minutes.

As described above, according to the above embodiment, the center server 3 is configured to determine, for each take-off/landing port 2, any one of the charging of the UAV 1, the discharging of the UAV 1, the operation of the UAV 1 for article delivery, and the standby of the UAV 1 as the action to be implemented in the take-off/landing port 2 on the basis of the delivery schedule information related to the schedule for article delivery and the battery information of the UAV 1 deployed in each of the plurality of take-off/landing ports 2. Therefore, the batteries 161 of the plurality of UAVs 1 can be used more efficiently by using the plurality of take-off/landing ports 2. Moreover, according to the above embodiment, not only the charging or discharging of the UAV 1 but also the operation or standby of the UAV 1 is determined according to the charged state of the battery 161 of the UAV 1 as the action to be implemented in the take-off/landing port 2. Therefore, even if the delivery schedule is suddenly changed, it is possible to newly schedule another article delivery, and it is possible to suppress an increase in power cost without thoughtlessly making discharge for preventing deterioration of the battery 161 of the UAV 1.

Incidentally, the above-described embodiment is one embodiment of the present invention, and the present invention is not limited to the above-described embodiment, changes from the above-described embodiment can be made on various configurations and the like within a scope not departing from the gist of the present invention, and such cases shall be also included in the technical scope of the present invention. For example, in the above embodiment, in a case where the scheduled time zone of the article delivery by the UAV 1 is changed, the action determining unit 334 may determine any one of the charging of the UAV 1, the discharging from the UAV 1, the operation of the UAV 1 for article delivery, and the standby of the UAV 1 as the action to be implemented in the take-off/landing port 2 on the basis of the information indicating the changed scheduled time zone and the battery information of the UAV 1 deployed in each of the plurality of take-off/landing ports 2. Moreover, in the above embodiment, the example in which the battery 161 is charged or discharged in the state where the UAV 1 is landing on the take-off/landing port 2 has been described. However, the battery 161 may be charged or discharged in a state where the UAV 1 is hovering at a position (in the air) that is about several tens of centimeters away in the vertical direction from the upper surface of the take-off/landing port 2. Moreover, the present invention is also applicable to a flying robot as the unmanned aerial vehicle.

### Reference Signs List

- 1: UAV
- 2: Take-off/landing port
- 3: Center server
- 4: Article delivery management server
- 5: Weather forecast management server
- 11: Drive unit
- 12: Positioning unit
- 13: Communication unit
- 14: Sensor unit
- 15: Storage unit
- 16: Charge/discharge unit
- 17: Control unit
- 21: Communication unit
- 22: Vehicle detection unit
- 23: Storage unit
- 24: Charge/discharge unit
- 25: Control unit
- 31: Communication unit
- 32: Storage unit
- 33: Control unit
- 161: Battery
- 162: Charge/discharge circuit
- 163: Power feed circuit
- 164: Control circuit
- 241: Power supply circuit
- 242: Power transmission/reception circuit
- 243: Control circuit
- 331: Delivery schedule information acquisition unit
- 332: Battery information acquisition unit
- 333: Weather forecast acquisition unit
- 334: Implementation action determining unit
- 335: Article delivery schedule retrieval unit
- 336: Command transmission unit
- NW: Communication network
- S: Delivery System

## Claims

1. An information processing device comprising:
a first acquisition means configured to acquire delivery schedule information related to a schedule for delivery of an article;
a second acquisition means configured to acquire battery information of each of a plurality of unmanned aerial vehicles deployed in a respective plurality of take-off/landing facilities each including a charge/discharge unit capable of charging and discharging the respective unmanned aerial vehicle; and
a determining means configured to determine, based on the delivery schedule information and the battery information of each of the plurality of unmanned aerial vehicles, an action to be implemented for each of the take-off/landing facilities, each action comprising one of:
charging of the unmanned aerial vehicle, discharging of the unmanned aerial vehicle;
operation of the unmanned aerial vehicle for delivery of the article; and
standby of the unmanned aerial vehicle.

2. The information processing device according to claim 1, wherein the determining means is configured to change an action to be implemented in any of the take-off/landing facilities according to addition to, or change of, the delivery schedule information.

3. The information processing device according to claim 1 or 2, wherein, in a case where the schedule for delivery of an article by an unmanned aerial vehicle for which the operation to deliver the article has been determined is canceled, the determining means is configured to determine to operate the unmanned aerial vehicle for delivery of another article in preference to discharging of the unmanned aerial vehicle, as an operation to be implemented in the respective take-off/landing facility within a first predetermined time.

4. The information processing device according to claim 3, further comprising
a retrieval means configured to retrieve a schedule for delivery of another article requiring operation of the unmanned aerial vehicle within the first predetermined time, wherein
in a case where the schedule for delivery of another article is not obtained by the retrieval means, the determining means is configured to determine to discharge the unmanned aerial vehicle, as an action to be implemented in the respective take-off/landing facility.

5. The information processing device according to any one of claims 1 to 4, wherein the determining means is configured to identify, based on the delivery schedule information and the battery information of each of the plurality of unmanned aerial vehicles, a first take-off/landing facility of the plurality of take-off/landing facilities in which a first unmanned aerial vehicle of the plurality of unmanned aerial vehicles is deployed, and to determine to operate the first unmanned aerial vehicle for article delivery, as the action to be performed at the first take-off/landing facility.

6. The information processing device according to claim 5, wherein
the battery information includes a charged state indicating a remaining amount of a battery of each respective unmanned aerial vehicle, and
the determining means is configured to identify the first take-off/landing facility on the basis of a comparison of the respective remaining amounts, or on the basis that the first unmanned aerial vehicle has a remaining amount larger than a threshold.

7. The information processing device according to any one of claim 5 or claim 6, wherein
the battery information includes an elapsed time after completion of charging of the battery of each respective unmanned aerial vehicle, and
the determining means is configured to identify the first take-off/landing facility on the basis of a comparison of the respective elapsed times, or on the basis that the first unmanned aerial vehicle has an elapsed time longer than a threshold.

8. The information processing device according to any one of claims 5 to 7, wherein
the battery information includes a degree of deterioration of the battery of each respective unmanned aerial vehicle, and
the determining means is configured to identify the first take-off/landing facility on the basis of a comparison of the respective elapsed times, or on the basis that the first unmanned aerial vehicle has a degree of deterioration lower than a threshold.

9. The information processing device according to any one of claims 5 to 8, wherein
the battery information includes a use history of the battery of each respective unmanned aerial vehicle, and
the determining means identifies the first take-off/landing facility on the basis of a comparison of the respective use histories, or on the basis that the first unmanned aerial vehicle has a use frequency or a number of uses smaller than a threshold.

10. The information processing device according to any one of claims 1 to 9, wherein the determining means is configured to identify a second take-off/landing facility of the plurality of take-off/landing facilities in which a second unmanned aerial vehicle of the plurality of unmanned aerial vehicles is deployed, whose article delivery start is not scheduled for a second predetermined time or more, and to determine to discharge the second unmanned aerial vehicle as the action to be implemented in the second take-off/landing facility.

11. The information processing device according to any one of claims 1 to 10, wherein the determining means is configured to identify a third take-off/landing facility of the plurality of take-off/landing facilities in which a third unmanned aerial vehicle of the plurality of unmanned aerial vehicles is deployed, whose article delivery start is scheduled after a third predetermined time, and to determine to charge the unmanned aerial vehicle as an action to be implemented in the third take-off/landing facility.

12. The information processing device according to any one of claims 1 to 11, further comprising
a third acquisition means configured to acquire a weather forecast, wherein
in a case where bad weather continuing for a fifth predetermined time or more after a fourth predetermined time is identified from the weather forecast, the determining means is configured to identify a fourth take-off/landing facility of the plurality of take-off/landing facilities in which a fourth unmanned aerial vehicle of the plurality of unmanned aerial vehicles is deployed, the fourth unmanned aerial vehicle having a remaining amount of a battery indicated in the battery information equal to or more than a threshold, and to discharge the fourth unmanned aerial vehicle as an action to be implemented in the identified take-off/landing facility.

13. A method for determining an action to be implemented, the method being executed by one or more computers, the method comprising:
a step of acquiring delivery schedule information related to a schedule for delivery of an article;
a step of acquiring battery information of each of a plurality of unmanned aerial vehicles deployed in a respective plurality of take-off/landing facilities each including a charge/discharge unit capable of charging and discharging the respective unmanned aerial vehicle; and
a step of determining, based on the delivery schedule information and the battery information of each of the plurality of unmanned aerial vehicles, an action to be implemented for each of the take-off/landing facilities, each action comprising one of:
charging of the unmanned aerial vehicle;
discharging of the unmanned aerial vehicle;
operation of the unmanned aerial vehicle for delivery of the article; and
standby of the unmanned aerial vehicle.

14. A delivery system comprising:
the information processing device according to any one of claim 1 to claim 12; and
the plurality of take-off/landing facilities.

15. The delivery system according to claim 13, wherein each of the take-off/landing facilities further includes a first control means configured to control the charge/discharge unit to supply power discharged from the unmanned aerial vehicle deployed in the one take-off/landing facility to the unmanned aerial vehicle deployed in any other take-off/landing facility through a power transmission means.

16. The delivery system according to claim 15, wherein each of the take-off/landing facilities further includes a second control means configured to control the charge/discharge unit to supply power discharged from the unmanned aerial vehicle deployed in the take-off/landing facility to a related device in a base where the one take-off/landing facility is installed through a power transmission means.
